# FASCICULE DE BREVET EUROPEEN

(11) **EP 3 301 040 B1**
(45) Date de publication et mention de la délivrance du brevet: **07.11.2018**
(21) Numéro de dépôt: 17188240.0
(22) Date de dépôt: 29.08.2017
(51) Int. Cl.: B65D 81/38

(54) **DISPOSITIF D'ISOLATION THERMIQUE**
WÄRMEDÄMMUNGSVORRICHTUNG
THERMAL INSULATION DEVICE

(30) Priorité: 29.09.2016 FR 1659303
(43) Date de publication de la demande: 04.04.2018
(73) Titulaire: Harry Plast, 59230 Saint Amand les Eaux (FR)
(72) Inventeur: HARRISSART, Jean Marie, 59135 WALLERS (FR); BLANCHART, Romaric, 59199 HERGNIES (FR)
(74) Mandataire: Balesta, Pierre

(56) Documents cités:
- WO-A1-99/24327
- GB-A- 2 316 669
- US-A1- 2003 047 564

## Description

La présente invention concerne les dispositifs d'isolation thermique, notamment pour emballage isotherme. En particulier, la présente invention concerne les dispositifs d'isolation thermique utilisés pour conserver un produit à une température sensiblement constante pendant une durée déterminée correspondant à un temps d'acheminement du produit.

Il est connu actuellement d'utiliser des emballages isothermes souples pour acheminer un produit à une température sensiblement constante pendant un temps déterminé. De tels emballages isothermes souples se présentent généralement sous la forme d'une enveloppe standard avec, dans chaque paroi, un matériau isolant souple tel un matelassage en laine, venant entourer le produit à acheminer. Eventuellement, un élément réfrigérant, par exemple avec un gel eutectique, est disposé dans l'emballage isotherme souple afin de maintenir le produit à la température souhaitée pendant une durée plus longue.

Cependant, même si de tels emballages isothermes souples sont faciles et pratiques à utiliser, ils ne donnent pas entière satisfaction, notamment en termes de performances thermiques. En effet, le matériau isolant souple peut être amené à être compressé lors de l'acheminement du produit, ce qui conduit automatiquement à une baisse de ses propriétés isolantes. Par ailleurs, de tels emballages isothermes souples présentent également de nombreux ponts thermiques entre l'intérieur et l'extérieur, notamment le long des bords de l'emballage au niveau desquels le matériau isolant souple présente une épaisseur plus faible voire inexistante, ce qui diminue d'autant les performances thermiques de l'emballage. Enfin, de tels emballages sont prévus pour des objets de tailles réduites et peu fragiles, notamment en raison du fait que ces emballages sont souples.

Il existe également des dispositifs isothermes destinés à être placés dans un carton : de tels dispositifs visent à conserver les avantages des emballages en carton pour l'acheminement de biens éventuellement volumineux ou fragiles, tout en améliorant l'efficacité thermique des matériaux utilisés. Un tel exemple est notamment décrit dans le document US 6 007 467.

Le document US 2003/047564 décrit des conteneurs isothermes améliorés. Les conteneurs sont composés d'un matériau isolant et peuvent facilement être constitués d'une seule feuille ou d'une pluralité de feuilles de matériau isolant. Les récipients peuvent être constitués d'un matériau isolant flexible et, s'ils sont placés à l'intérieur d'un récipient externe, ils peuvent se conformer aux contours de la surface intérieure du récipient externe. Les récipients sont thermiquement isolants et étanches, en raison des connexions continues qui résultent des méthodes de formation du récipient.

Toutefois, pour ces emballages isothermes également, il existe de nombreux ponts thermiques entre l'intérieur et le carton, ce qui limite la durée de conservation dans le carton. Par ailleurs, ils sont souvent fastidieux et longs à manipuler, ce qui rend leur usage peu pratique.

### Objet et résumé de l'invention

La présente invention vise à résoudre les différents problèmes techniques énoncés précédemment. En particulier, la présente invention vise à proposer un dispositif d'isolation thermique, pour l'acheminement de produit, présentant à la fois des propriétés d'isolation élevées, un encombrement réduit et une facilité d'utilisation améliorée.

Ainsi, selon un aspect, il est proposé un dispositif d'isolation thermique selon la revendication 1 pour former une enceinte, par exemple un polyèdre de préférence de forme parallélépipédique, destinée à recevoir un produit à transporter. Le dispositif d'isolation thermique comporte au moins deux feuilles présentant chacune une face intérieure destinée à être orientée vers l'intérieur de l'enceinte, et une face extérieure destinée à être orientée vers l'extérieur de l'enceinte, les faces extérieure et intérieure de chaque feuille étant délimitées par deux bords latéraux. Lesdites au moins deux feuilles sont chacune métallisées sur au moins une de leurs faces, et comportent des lignes de pliure et/ou de découpe permettant de former ladite enceinte à partir du dispositif d'isolation thermique. Le dispositif d'isolation thermique comprend au moins une soudure, notamment thermique, permettant d'assembler ensemble le bord latéral de deux feuilles adjacentes et destinée à former une arête de l'enceinte.

Ainsi, l'invention propose un dispositif d'isolation thermique destiné à être placé dans un carton, afin d'en améliorer les propriétés thermiques tout en conservant les propriétés de volume et de tenue mécanique du carton. Le dispositif d'isolation thermique permet d'augmenter l'isolation thermique du carton, notamment grâce aux revêtements métallisés, mais en présentant une épaisseur limitée qui ne vient pas diminuer de manière conséquente le volume du carton.

De plus, le dispositif d'isolation thermique est conçu, ou configuré, de façon à pouvoir être aplati lorsqu'il n'est pas utilisé, afin de faciliter son stockage et son transport. Plus précisément, le volume en trois dimensions de l'enceinte n'est pas obtenu à partir du dispositif grâce à ladite au moins une soudure, mais grâce aux lignes de pliure et/ou de découpe. Ainsi, il est possible de réaliser ladite au moins une soudure sans avoir un dispositif d'isolation présentant un volume en trois dimensions. Au contraire, avec le dispositif selon l'invention, les deux feuilles sont assemblées selon ladite au moins une soudure, mais ne forment pas encore un volume en trois dimensions : c'est seulement grâce aux lignes de pliure et/ou de découpe que l'enceinte est formée à partir des deux feuilles soudées. Ainsi, les lignes de pliure et/ou de découpe et ladite au moins une soudure sont configurées pour permettre d'aplatir le dispositif d'isolation ou de former l'enceinte, par pliage selon la ou les lignes de pliure.

En particulier, ladite au moins une soudure forme une ligne de pliure pour aplatir le dispositif ou pour mettre en forme l'enceinte à partir du dispositif.

Préférentiellement, le dispositif d'isolation thermique est configuré pour être aplati par pliage selon ladite au moins une soudure et éventuellement, ou bien, par pliage selon une ou des lignes de pliure.

Enfin, grâce à l'invention, le dispositif d'isolation thermique peut notamment limiter les ponts thermiques entre l'intérieur et l'extérieur, et faciliter sa mise ne forme. En effet, la soudure assemblant le bord latéral des deux feuilles adjacentes forme un moyen d'écartement qui permet de limiter les échanges thermiques entre l'intérieur et l'extérieur. En effet, au niveau des arêtes, il apparaît souvent un écrasement du matériau qui est propice aux échanges thermiques. Dans le cas de la présente invention, même si le matériau est écrasé par la soudure, la largeur nécessaire à l'obtention de la soudure permet de tenir à distance le contenu du dispositif d'isolation thermique de l'extérieur, et donc de limiter les échanges thermiques.

Par ailleurs, la soudure permet également de former une ligne avec une rigidité plus importante que dans le reste du dispositif d'isolation thermique, ce qui facilite la mise en forme du dispositif d'isolation thermique lorsque celui-ci est aplati. En effet, en manipulant le dispositif d'isolation thermique, la soudure va créer une ligne de résistance aux contraintes exercées par l'utilisateur, ce qui va permettre, en combinaison avec les lignes de pliure et/ou de découpe, de conduire à la formation de l'enceinte. Il ne restera plus alors qu'à plier les rabats supérieurs et inférieurs pour fermer l'enceinte.

Préférentiellement, la soudure fait saillie vers l'extérieur de l'enceinte. Autrement dit, la soudure est réalisée par assemblages des deux feuilles adjacentes via leur face intérieure.

Préférentiellement, la soudure présente une largeur comprise entre 0,5cm et 3cm, de préférence entre 0,5cm et 2cm.

Préférentiellement, lesdites au moins deux feuilles comportent chacune une couche polymérique moussée et un revêtement métallisé. On prévoit ici un matériau polymérique moussé permettant de limiter les échanges thermiques, même avec une faible épaisseur, le matériau moussé étant associé à un revêtement métallique limitant les échanges thermiques par rayonnement.

Préférentiellement, la couche polymérique moussée comprend du polyéthylène moussé, par exemple du polyéthylène de faible densité. Le polyéthylène moussé est un matériau connu pour l'homme du métier, qui est peu onéreux et simple à mettre en oeuvre.

Préférentiellement, la couche polymérique moussée présente une épaisseur comprise entre 1 et 5mm, de préférence entre 2 et 4mm. On prévoit dans ce cas une épaisseur faible du matériau moussé, pour que le dispositif d'isolation thermique, même à l'état aplati, soit peu encombrant.

Préférentiellement, le revêtement métallisé comprend un film de polyéthylène téréphtalate métallisé.

Préférentiellement, le revêtement métallisé est disposé sur la face extérieure, de préférence sur les faces extérieure et intérieure desdites au moins deux feuilles. L'utilisation d'un revêtement métallisé sur les deux faces des feuilles permet d'améliorer les propriétés thermiques du dispositif d'isolation thermique tout en gardant un encombrement sensiblement identique, la dimension des revêtements métallisés étant très inférieure à celle de l'enceinte formée par le dispositif d'isolation thermique.

Préférentiellement, le dispositif d'isolation thermique comporte également, sur au moins une partie de la face intérieure, un film soudant, par exemple en polyéthylène. Le film soudant a pour but de faciliter la fabrication du dispositif d'isolation thermique, en facilitant la mise en oeuvre de la soudure liant les deux feuilles adjacentes. De plus, le film soudant présente une épaisseur très faible qui ne vient pas augmenter l'encombrement général du dispositif d'isolation thermique.

Selon l'invention, l'enceinte comprend des parois latérales et des rabats supérieurs et inférieurs, et la ou les soudures s'étendent sur une portion des bords latéraux correspondant à la hauteur des parois latérales de l'enceinte.

Les soudures sont disposées au niveau des arêtes de l'enceinte. Or, les rabats peuvent être prévus dans la continuité des parois latérales, avec une ligne de découpe entre les rabats adjacents. La soudure peut alors former l'intégralité de l'arête de l'enceinte, en présentant une longueur sensiblement égale à la hauteur des parois latérales de l'enceinte.

Selon l'invention, les rabats supérieurs et/ou inférieurs peuvent être articulés aux parois latérales par une ligne de pliure. En particulier, au moins une feuille, de préférence chaque feuille du dispositif, forme au moins une paroi latérale, un rabat supérieur et un rabat inférieur, les rabats supérieur et inférieur étant articulés sur deux bords opposés d'une paroi latérale par une ligne de pliure.

Plus préférentiellement, au moins une feuille, de préférence chaque feuille du dispositif, forme deux parois latérales séparées par une ligne de pliure, deux rabats supérieurs et deux rabats inférieurs, un rabat supérieur et un rabat inférieur étant articulés sur deux bords opposés de chaque paroi latérale par une ligne de pliure.

Préférentiellement, la ou les soudures s'étendent entre les deux lignes de pliure articulant les rabats supérieur et inférieur par rapport à une paroi latérale.

Préférentiellement, chaque feuille forme deux parois latérales séparées par une ligne de pliure s'étendant entre les deux lignes de pliure articulant les rabats supérieur et inférieure par rapport à une paroi latérale. Chaque feuille comprend également deux lignes de découpe qui s'étendent depuis chaque extrémité de la ligne de pliure séparant les deux parois latérales. Les lignes de découpe et ladite ligne de pliure sont de préférence alignées, c'est-à-dire dans la continuité l'une de l'autre.

Préférentiellement, la longueur non-soudée des bords latéraux est choisie de manière à permettre une superposition d'au moins une partie des rabats supérieurs et/ou inférieurs. La longueur des rabats supérieurs et inférieurs est prévue pour obtenir une superposition de ceux-ci lorsque l'enceinte formée par le dispositif d'isolation thermique est fermée. En effet, la fermeture par rabats peut laisser des ponts thermiques entre l'intérieur et l'extérieur, notamment au centre de la face fermée par des rabats. Grâce à l'invention, les rabats viennent se superposer au niveau de la partie médiane de la face, afin de former une double épaisseur de matériau limitant les échanges thermiques.

Par ailleurs, une telle longueur de rabat permet également de prévoir un moyen de fixation des rabats entre eux, au niveau de la partie de superposition. Le moyen de fixation peut par exemple être un autocollant qui est collé à l'extrémité d'un des rabats, avec un film protecteur sur le dessus qu'on enlève pour coller ledit rabat au rabat opposé. On facilite ainsi la fermeture de l'enceinte au niveau des faces supérieure et inférieure.

Préférentiellement, le dispositif d'isolation thermique comporte deux feuilles superposées et assemblées l'une à l'autre par leurs deux bords latéraux, chaque feuille comportant, entre les deux bords latéraux, une ligne de pliure sensiblement parallèle auxdits deux bord latéraux et destinée à former une arête de l'enceinte. L'utilisation de deux soudures non-adjacentes, c'est-à-dire opposées lorsque l'enceinte est formée, conduit à une mise en forme rapide et intuitive de l'enceinte à partir du dispositif d'isolation thermique à l'état aplati.

L'invention concerne également un emballage isotherme comprenant un dispositif d'isolation thermique tel que décrit précédemment, et un étui de conditionnement, par exemple un carton de forme générale similaire à celle de l'enceinte, dans lequel est positionnée ladite enceinte.

On obtient alors un emballage isotherme complet apportant à la fois des propriétés thermiques, mais également mécanique grâce à l'étui de conditionnement.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure **1** est une représentation schématique en perspective d'un dispositif d'isolation thermique selon l'invention, à l'état aplati,
- la figure **2** est une représentation schématique en perspective du dispositif d'isolation thermique de la figure **1****,** à l'état déployé et avec les rabats non-pliés,
- la figure **3** une représentation schématique en perspective du dispositif d'isolation thermique de la figure **1****,** pendant l'étape de fermeture de l'enceinte par les rabats, et
- la figure **4** est une représentation en coupe d'une des feuilles constituant le dispositif d'isolation thermique de la figure **1****.**

### Description détaillée de l'invention

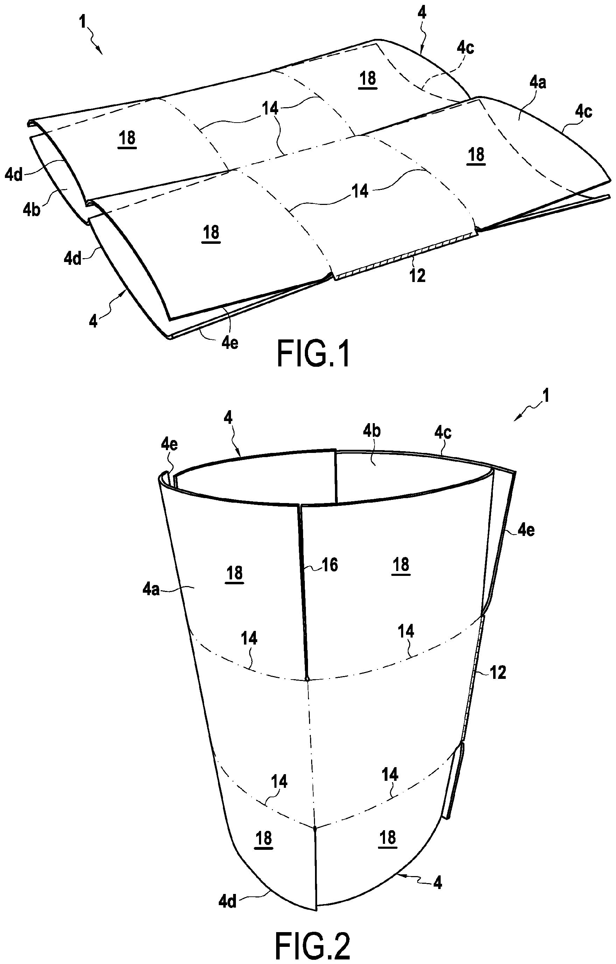

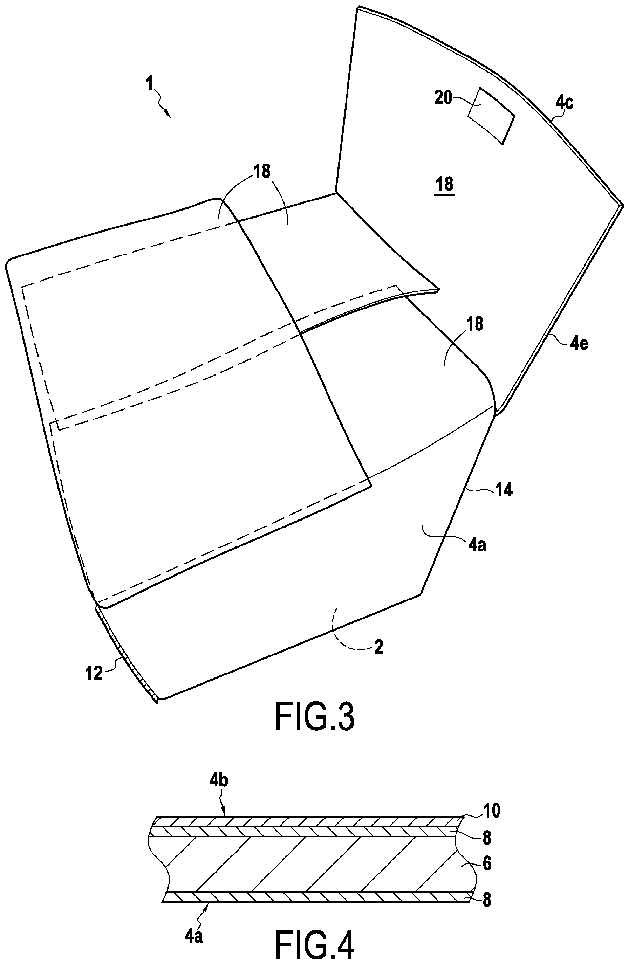

La figure 1 illustre, de manière schématique, un exemple de dispositif d'isolation thermique 1 selon l'invention. Le dispositif d'isolation thermique 1 permet notamment de former une enceinte 2 (voir figure 3) dans laquelle sera transporté un produit à conserver au frais pendant une durée déterminée.

Le dispositif d'isolation thermique 1 comprend notamment deux feuilles 4 sensiblement identiques. Chaque feuille 4 peut être rectangulaire, et comprendre notamment : une face extérieure 4a correspondant à la surface exposée de la feuille 4 lorsque l'enceinte 2 est formée, une face intérieure 4b correspondant à la surface de la feuille 4 délimitant intérieurement l'enceinte 2, un bord supérieur 4c, un bord inférieur 4d et deux bords latéraux 4e.

Les deux feuilles 4 sont superposées et assemblées de manière à ce que leurs bords 4c, 4d et 4e soient regroupés par paires, avec les faces intérieures 4b des deux feuilles en regard l'une de l'autre. En particulier, les bords latéraux 4e des deux feuilles sont fixés ensemble afin de relier entre elles les parois latérales qui délimiteront latéralement l'enceinte 2 destinée à recevoir le produit à transporter.

Comme illustré sur la figure 4, chaque feuille 4 comporte un ensemble de plusieurs couches avec des propriétés spécifiques. Ainsi, chaque feuille 4 peut comprendre une couche centrale 6 présentant des propriétés d'isolation thermique, par exemple une couche polymérique de polyéthylène moussé, dont les deux faces sont recouvertes chacune par un revêtement métallisé 8, par exemple en polyéthylène téréphtalate métallisé. Les revêtements métallisés 8 permettent de réfléchir les rayonnements, notamment thermiques, et donc de limiter les échanges thermiques par rayonnements entre l'intérieur et l'extérieur de l'enceinte 2.

Enfin, la feuille 4 comprend également, sur la face intérieure 4b, un film soudant 10 recouvrant le revêtement métallisé 8. Le film soudant 10 peut par exemple être un film de polyéthylène, et est notamment utilisé pour assembler les deux feuilles 4 de l'enceinte 2 par leurs bords latéraux 4e. Plus particulièrement, les deux feuilles 4 sont assemblées au niveau de leurs bords latéraux 4e grâce à deux soudures 12. Les soudures 12 sont réalisées par disposition des deux bords latéraux 4e dans une presse, puis application d'une force et de chaleur sur les faces extérieures 4a des bords latéraux 4e des deux feuilles 4 pour les assembler ensemble par leurs faces intérieures 4b au niveau desquelles se trouve le film soudant 10.

Les soudures 12 s'étendent selon une portion des bords latéraux 4e, de préférence une portion centrale dont la longueur correspond à la hauteur des parois latérales de l'enceinte 4. On obtient alors des soudures 12 qui forment intégralement une arête de l'enceinte 2.

Les soudures 12 permettent non seulement d'assembler les deux feuilles 4, mais également d'apporter deux lignes de rigidité facilitant la mise en forme de l'enceinte 2 à partir du dispositif d'isolation thermique 1 disposé à plat. Il est notamment plus facile de former une forme sensiblement cylindrique telle qu'illustrée à la figure 2, à partir du dispositif d'isolation thermique 1 disposé à plat tel qu'illustré à la figure 1.

Enfin, les soudures 12 permettent de créer un écartement entre l'intérieur de l'enceinte 2 et l'extérieur, notamment au niveau des arêtes latérales de l'enceinte 2. En effet, le matériau du dispositif d'isolation thermique 1 se retrouve compressé au niveau des arêtes latérales de l'enceinte 2, soit parce qu'il est plié soit parce qu'il est soudé. Or, l'efficacité d'isolation thermique est plus faible lorsque le matériau isolant est compressé, ce qui conduit à des ponts thermiques entre l'intérieur et l'extérieur de l'enceinte 2 au niveau desdites arêtes. Afin de limiter de tels ponts, les soudures 12 sont choisies de manière à créer un écartement entre l'intérieur et l'extérieur de l'enceinte 2 : les soudures 12 sont formées par pressage des faces extérieures 4a des deux feuilles 4, de manière à ce que les soudures 12 fassent saillie sur la surface externe de l'enceinte 2. Les soudures 12 vont ainsi créer une interface d'air entre le dispositif d'isolation thermique 1 et, par exemple, l'étui en carton dans lequel il sera disposé, ce qui améliore l'isolation thermique au niveau des arêtes latérales. Les soudures 12 peuvent par exemple présenter une largeur d'environ 1cm.

Par ailleurs, chaque feuille 4 comprend également des lignes de pliure 14 et/ou de découpe 16. Les lignes de découpe 16 sont prévues pour former au moins deux rabats 18 du côté supérieur et inférieur de chaque feuille 4. Les lignes de découpe 16 sont disposées sensiblement parallèles aux soudures 12, c'est-à-dire perpendiculaires aux bords supérieur 4c et inférieur 4d. Dans l'exemple illustré sur les figures, chaque feuille 4 comporte deux lignes de découpe 16 qui sont situées toutes les deux à mi-distance des bords latéraux 4e : une ligne s'étendant depuis le bord supérieur 4c et une ligne s'étendant depuis le bord inférieur 4d, les deux lignes de découpe 16 étant séparées par une ligne de pliure 14.

Chaque ligne de découpe 16 s'étend sur une longueur sensiblement égale au quart de la distance séparant les deux bords latéraux 4e de la feuille 4, de préférence légèrement supérieure. On obtient ainsi des rabats 18 qui, à l'état replié, viennent se superposer l'un sur l'autre, de manière à améliorer l'isolation thermique au niveau des rabats lorsque l'enceinte 2 est fermée. Par ailleurs, grâce à la superposition, il devient aussi possible de fermer le fond de l'enceinte 2, en prévoyant par exemple un moyen autocollant 20 (voir figure 3) disposé à proximité du bord supérieur 4c d'un des rabats 18 et permettant de maintenir collés ensemble deux rabats 18 opposés.

Comme indiqué précédemment, chaque feuille 4 comporte une ligne de pliure 14 disposée entre les deux lignes de découpe 16 : cette ligne de pliure 14 est destinée à former l'une des arêtes de l'enceinte 2. Par ailleurs, chaque feuille 4 comprend également quatre autres lignes de pliure 14 correspondant chacune à un rabat 18 : deux lignes de pliure 14 situées du côté du bord supérieur, et deux lignes de pliure 14 situées du côté inférieur. Ces lignes de pliure 14 sont parallèles aux bords supérieur 4c et inférieur 4d, et s'étendent entre un bord latéral 4e et une ligne de découpe 16.

Comme illustré à la figure 3, les rabats 18 sont rabattus afin de former l'enceinte 2. Les soudures 12 forment alors deux arêtes latérales de l'enceinte 2, tandis que les deux autres arêtes de l'enceinte 2 sont formées par une ligne de pliure 14.

On obtient ainsi une enceinte 2 destinée à recevoir un produit à conserver au frais pendant une durée déterminée, et qui peut être placée dans un étui de conditionnement, par exemple un carton, qui confère à l'ensemble sa tenue mécanique.

Comme illustré sur les figures 1 à 3, le dispositif peut être aplati en utilisant les soudures comme lignes de pliure, et peut être mis en forme en trois dimensions, en pliant les lignes de pliure et de soudure de manière à former l'enceinte. La mise en forme de l'enceinte et son aplatissement ne modifient donc pas les soudures et ne nécessitent pas de former ou d'enlever les soudures, ce qui permet une manipulation aisée et une réutilisation du dispositif tout en ayant un encombrement réduit pour le rangement.

Grâce au dispositif d'isolation thermique 1 selon l'invention, il devient possible d'obtenir facilement un emballage isotherme permettant de diminuer les échanges thermiques entre l'intérieur et l'extérieur, tout en restant peu encombrant, léger et facile à utiliser.

## Revendications

1. Dispositif d'isolation thermique (1) pour former une enceinte (2) destinée à recevoir un produit à transporter, le dispositif d'isolation thermique (1) comportant au moins deux feuilles (4) présentant chacune une face intérieure (4b) destinée à être orientée vers l'intérieur de l'enceinte (2), et une face extérieure (4a) destinée à être orientée vers l'extérieur de l'enceinte (2), les faces extérieure et intérieure de chaque feuille (4) étant délimitées par deux bords latéraux (4e),
lesdites au moins deux feuilles (4) étant chacune métallisées sur au moins une de leurs faces, et comportant des lignes de pliure (14) et/ou de découpe (16) permettant de former ladite enceinte (2) à partir du dispositif d'isolation thermique (1),
dans lequel le dispositif d'isolation thermique (1) comprend au moins une soudure (12), notamment thermique, permettant d'assembler ensemble le bord latéral (4e) de deux feuilles adjacentes (4) et destinée à former une arête de l'enceinte (2), **caractérisé en ce que** l'enceinte (2) comprend des parois latérales et des rabats (18) supérieurs et inférieurs, la ou les soudures s'étendant sur une portion des bords latéraux correspondant à la hauteur des parois latérales de l'enceinte, et **en ce que** au moins une feuille, de préférence chaque feuille du dispositif, forme au moins une paroi latérale, un rabat supérieur et un rabat inférieur, les rabats supérieur et inférieur étant articulés sur deux bords opposés d'une paroi latérale par une ligne de pliure.

2. Dispositif d'isolation thermique (1) selon la revendication 1, configuré pour pouvoir être aplati, de préférence par pliage selon ladite au moins une soudure et éventuellement par pliage selon une ou des lignes de pliure.

3. Dispositif d'isolation thermique (1) selon la revendication 1 ou 2, dans lequel lesdites au moins deux feuilles (4) comportent chacune une couche polymérique moussée (6) et un revêtement métallisé (8).

4. Dispositif d'isolation thermique (1) selon la revendication 3, dans lequel la couche polymérique moussée (6) comprend du polyéthylène moussé, par exemple du polyéthylène de faible densité.

5. Dispositif d'isolation thermique (1) selon la revendication 3 ou 4, dans lequel la couche polymérique moussée (6) présente une épaisseur comprise entre 1 et 5mm, de préférence entre 2 et 4mm.

6. Dispositif d'isolation thermique (1) selon l'une quelconque des revendications 3 à 5, dans lequel le revêtement métallisé (8) comprend un film de polyéthylène téréphtalate métallisé.

7. Dispositif d'isolation thermique (1) selon l'une quelconque des revendications 3 à 6, dans lequel le revêtement métallisé (8) est disposé sur la face extérieure (4a), de préférence sur les faces extérieure (4a) et intérieure (4b) desdites au moins deux feuilles (4).

8. Dispositif d'isolation thermique (1) selon l'une quelconque des revendications précédentes, comportant également, sur au moins une partie de la face intérieure (4b), un film soudant (10), par exemple en polyéthylène.

9. Dispositif d'isolation thermique (1) selon l'une quelconque des revendications précédentes, dans lequel au moins une feuille, de préférence chaque feuille du dispositif, forme deux parois latérales séparées par une ligne de pliure, deux rabats supérieurs et deux rabats inférieurs, un rabat supérieur et un rabat inférieur étant articulés sur deux bords opposés de chaque paroi latérale par une ligne de pliure.

10. Dispositif d'isolation thermique (1) selon la revendication précédente, dans lequel la longueur non-soudée des bords latéraux (4e) est choisie de manière à permettre une superposition d'au moins une partie des rabats (18) supérieurs et/ou inférieurs.

11. Dispositif d'isolation thermique (1) selon l'une quelconque des revendications précédentes, comportant deux feuilles (4) superposées et assemblées l'une à l'autre par leurs deux bords latéraux (4e), chaque feuille (4) comportant, entre les deux bords latéraux (4e), une ligne de pliure (14) sensiblement parallèle auxdits deux bord latéraux (4e) et destinée à former une arête de l'enceinte (2).

12. Emballage isotherme comprenant un dispositif d'isolation thermique (1) selon l'une quelconque des revendications précédentes, et un étui de conditionnement, par exemple un carton de forme générale similaire à celle de l'enceinte (2), dans lequel est positionnée ladite enceinte (2).

## Patentansprüche

1. Wärmedämmungsvorrichtung (1) zum Bilden einer Umhüllung (2), die dazu bestimmt ist, ein zu transportierendes Produkt aufzunehmen, wobei die Wärmedämmungsvorrichtung (1) mindestens zwei Lagen (4) umfasst, die jeweils eine Innenseite (4b), die dazu bestimmt ist, zur Innenseite der Umhüllung (2) zu zeigen, und eine Außenseite (4a), die dazu bestimmt ist, zur Außenseite der Umhüllung (2) zu zeigen, aufweisen, wobei die Außen- und Innenseiten jeder Lage (4) durch zwei Seitenkanten (4e) begrenzt sind,
wobei die mindestens zwei Lagen (4) jeweils auf mindestens einer ihrer Flächen metallisiert sind und Falz- (14) und/oder Schneidlinien (16) umfassen, die es ermöglichen, die Umhüllung (2) aus der Wärmedämmungsvorrichtung (1) zu bilden,
wobei die Wärmedämmungsvorrichtung (1) mindestens eine Schweißnaht (12), insbesondere eine thermische Schweißnaht, umfasst, die es ermöglicht, die Seitenkante (4e) zweier benachbarter Lagen (4) miteinander zu verbinden und die dazu bestimmt ist, eine Kante der Umhüllung (2) zu bilden,
**dadurch gekennzeichnet, dass** die Umhüllung (2) obere und untere Seitenwände und Klappen (18) umfasst, wobei sich die Schweißnaht/-nähte über einen Abschnitt der Seitenkanten erstreckt/erstrecken, der der Höhe der Seitenwände der Umhüllung entspricht,
und dass mindestens eine Lage, vorzugsweise jede Lage der Vorrichtung, mindestens eine Seitenwand, eine obere Klappe und eine untere Klappe bildet, wobei die obere und untere Klappe an zwei gegenüberliegenden Kanten einer Seitenwand durch eine Falzlinie angelenkt sind.

2. Wärmedämmungsvorrichtung (1) gemäß Anspruch 1, die dazu ausgebildet ist, zusammenfaltbar zu sein, vorzugsweise durch Falzen entlang der mindestens einen Schweißnaht und gegebenenfalls durch Falzen entlang einer oder mehrerer Falzlinien.

3. Wärmedämmungsvorrichtung (1) gemäß Anspruch 1 oder 2, wobei die mindestens zwei Lagen (4) jeweils eine geschäumte Polymerschicht (6) und eine metallisierte Beschichtung (8) umfassen.

4. Wärmedämmungsvorrichtung (1) gemäß Anspruch 3, wobei die geschäumte Polymerschicht (6) geschäumtes Polyethylen, zum Beispiel Polyethylen niedriger Dichte, umfasst.

5. Wärmedämmungsvorrichtung (1) gemäß Anspruch 3 oder 4, wobei die geschäumte Polymerschicht (6) eine Dicke zwischen 1 und 5 mm, vorzugsweise zwischen 2 und 4 mm aufweist.

6. Wärmedämmungsvorrichtung (1) gemäß einem der Ansprüche 3 bis 5, wobei die metallisierte Beschichtung (8) einen Film aus metallisiertem Polyethylenterephthalat umfasst.

7. Wärmedämmungsvorrichtung (1) gemäß einem der Ansprüche 3 bis 6, wobei die metallisierte Beschichtung (8) auf der Außenseite (4a), vorzugsweise auf der Außenseite (4a) und der Innenseite (4b), der mindestens zwei Lagen (4) vorgesehen ist.

8. Wärmedämmungsvorrichtung (1) gemäß einem der vorgenannten Ansprüche, die auch auf mindestens einem Teil der Innenfläche (4b) einen schweißbaren Film (10), zum Beispiel aus Polyethylen, umfasst.

9. Wärmedämmungsvorrichtung (1) gemäß einem der vorgenannten Ansprüche, wobei mindestens eine Lage, vorzugsweise jede Lage der Vorrichtung, zwei durch eine Falzlinie getrennte Seitenwände sowie zwei obere und zwei untere Klappen bildet, wobei eine obere und eine untere Klappe an zwei gegenüberliegenden Kanten jeder Seitenwand durch eine Falzlinie angelenkt sind.

10. Wärmedämmungsvorrichtung (1) gemäß dem vorgenannten Anspruch, wobei die ungeschweißte Länge der Seitenkanten (4e) so gewählt ist, dass zumindest ein Teil der oberen und/oder unteren Klappen (18) überlappen kann.

11. Wärmedämmungsvorrichtung (1) gemäß einem der vorgenannten Ansprüche, umfassend zwei Lagen (4), die einander überlagern und durch ihre beiden Seitenkanten (4e) miteinander verbunden sind, wobei jede Lage (4) zwischen den beiden Seitenkanten (4e) eine Falzlinie (14) umfasst, die im Wesentlichen parallel zu den beiden Seitenkanten (4e) verläuft und dazu bestimmt ist, eine Kante der Umhüllung (2) zu bilden.

12. Isothermische Verpackung, umfassend eine Wärmedämmungsvorrichtung (1) gemäß einem der vorgenannten Ansprüche und eine Verpackungsschachtel, zum Beispiel eine Pappschachtel mit einer der Form der Umhüllung (2) ähnlichen allgemeinen Form, in der sich die Umhüllung (2) befindet.

## Claims

1. A thermal insulation device (1) for forming a chamber (2) intended to receive a product to be transported, the thermal insulation device (1) comprising at least two sheets (4) each having an inner surface (4b) intended to be oriented toward the inside of the chamber (2), and an outer surface (4a) intended to be oriented toward the outside of the chamber (2), the outer and inner surfaces of each sheet (4) being delimited by two side edges (4e),
said at least two sheets (4) each being metallized over at least one of their surfaces, and comprising fold (14) and/or cutting (16) lines making it possible to form said chamber (2) from the thermal insulation device (1), wherein the thermal insulation device (1) includes at least one weld (12), in particular thermal, making it possible to assemble the side edge (4e) of two adjacent sheets (4) together and intended to form a rim of the chamber (2),
**characterized in that** the chamber (2) includes side walls and upper and lower flaps (18), the weld(s) extending over a portion of the side edges corresponding to the height of the side walls of the chamber,
and **in that** at least one sheet, preferably each sheet of the device, forms at least one side wall, an upper flap and a lower flap, the upper and lower flaps being articulated on two opposite edges of a side wall by a fold line.

2. The thermal insulation device (1) according to claim 1, configured to be able to be flattened, preferably by folding along said at least one weld and optionally by folding along one or several fold lines.

3. The thermal insulation device (1) according to claim 1 or 2, wherein said at least two sheets (4) each comprise a foam polymeric layer (6) and a metallized coating (8).

4. The thermal insulation device (1) according to claim 3, wherein the foam polymeric layer (6) includes foam polyethylene, for example low-density polyethylene.

5. The thermal insulation device (1) according to claim 3 or 4, wherein the foam polymeric layer (6) has a thickness between 1 and 5 mm, preferably between 2 and 4 mm.

6. The thermal insulation device (1) according to any one of claims 3 to 5, wherein the metallized coating (8) includes a metallized polyethylene terephthalate film.

7. The thermal insulation device (1) according to any one of claims 3 to 6, wherein the metallized coating (8) is arranged on the outer surface (4a), preferably on the outer (4a) and inner (4b) surfaces of said at least two sheets (4).

8. The thermal insulation device (1) according to any one of the preceding claims, also comprising, on at least part of the inner surface (4b), a welding film (10), for example made from polyethylene.

9. The thermal insulation device (1) according to any one of the preceding claims, wherein at least one sheet, preferably each sheet of the device, forms two side walls separated by a fold line, two upper flaps and two lower flaps, one upper flap and one lower flap being articulated on two opposite edges of each side wall by a fold line.

10. The thermal insulation device (1) according to the preceding claim, wherein the non-welded length of the side edges (4e) is chosen so as to allow a superposition of at least part of the upper and/or lower flaps (18).

11. The thermal insulation device (1) according to any one of the preceding claims, comprising two sheets (4) that are superimposed and assembled to one another by their two side edges (4e), each sheet (4) comprising, between the two side edges (4e), a fold line (14) substantially parallel to said two side edges (4e) and intended to form a rim of the chamber (2).

12. An isothermal packaging including a thermal insulation device (1) according to any one of the preceding claims, and a packaging cartridge, for example a box with a general shape similar to that of the chamber (2), in which said chamber (2) is positioned.
